# EUROPEAN PATENT SPECIFICATION

(11) **EP 0 524 131 B1**
(45) Date of publication and mention of the grant of the patent: **13.03.1996**
(21) Application number: 92610050.4
(22) Date of filing: 23.06.1992
(51) Int. Cl.: A01D 43/10, A01D 57/00

(54) **Lift suspended mower**
An einer Kupplungsvorrichtung angehängte Mähmaschine
Faucheuse montée sur un dispositif d'attelage

(30) Priority: 26.06.1991 DK 1257/91
(43) Date of publication of application: 20.01.1993
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Rasmussen, Laurits, DK-6400 Sonderborg (DK)
(74) Representative: Raffnsöe, Knud Rosenstand

(56) References cited:
- EP-A- 0 155 063
- EP-A- 0 261 694
- EP-A- 0 332 552
- DE-A- 1 782 826
- FR-A- 2 535 154
- GB-A- 2 119 618
- US-A- 2 974 469

## Description

The present invention relates to a mower of the type which on one side is pivotally connected with a frame structure for direct mounting on the rear carrying arms of a tractor, so that by means of said pivotal connection it can be turned from a transport position, in which it is substantially parallel to the driving direction of the tractor to a working position outside the track of the tractor, in which it is substantially transverse to the driving direction, whereas an activating member for mechanical performance of the pivotal movement is arranged between said frame structure and an element connected to the supporting structure of the mower (see GB-A-2 119 618).

For towed mowers with conditioning cylinders, from which the crop is ejected at a certain speed, it is known per se to adjust the mower so that it assumes an oblique position as compared with the normal working position substantially parallel with the driving direction of the tractor in order to windrow the ejected swath in twos. In a known mower, such a position in which the side of the mower which is remotest from the tractor is shifted to the rear seen in the driving direction, can be established by hydraulic steering of the bull wheels of the mower.

At the same time, two side limiting plates projecting to the rear at the swath ejection opening of the mower are pivotal.

This known mower is used in a way that ensures that it is in the normal position at right angles to the driving direction during every second drive and in said oblique position during every second drive.

A lift-suspended mower of the type according to the invention is characterized in that said activating member is designed so as to be capable of varying the working position of the mower on both sides of a position at right angles to the driving direction of the tractor between oblique positions, in which the side of the mower remotest from the frame structure is forward of and to the rear of the frame structure seen in the driving direction respectively, whereas the mower is provided with means for adjustment of the position of the windrows of ejected swath on the ground.

The invention is based on recognition of the fact that for a lift-suspended mower which is suspended directly in the carrying arms of a tractor and does not have its own bull wheels it is possible to obtain a large angle variation range for the working position between said two oblique positions on each side of the position at right angles to the driving direction, as the activating member normally designed as a hydraulic cylinder and serving to perform the pivotal movement between the transport position and the working position can have a corresponding length of stroke.

The mower according to the invention is used in a way that ensure that after each drive a switch is made from one to the other of said two oblique positions.

The advantage over known windrowing mowers is thereby obtained that by adjusting the swath width by means of sideways limiting plates projecting at the rear end, only the limiting plate remotest from the tractor needs to be pivotal whereas the other may be stationary.

The thus movable sideways limiting plates, of which one is at a distance from the tractor determined by the working width of the mower due to the weight may be a disadvantage in lift-suspended mowers, an alternative possibility is to adjust the position of the windrows of ejected swath on the ground by adjusting the throwing range.

This may be achieved by providing means for adjustment of the rate of rotation of the conditioning cylinder or by means of a control plate arranged pivotally on a horizontal axis behind the conditioning cylinder for limiting the ejection of the swath from above.

The invention is further explained in the following with reference to the schematical drawing, in which
Fig 1 shows the variation of the working position in an embodiment of a mower according to the invention during subsequent runs through the field;
Fig 2 an alternative embodiment of means for adjustment of windrowing the ejected swath with the mower in an oblique working position.

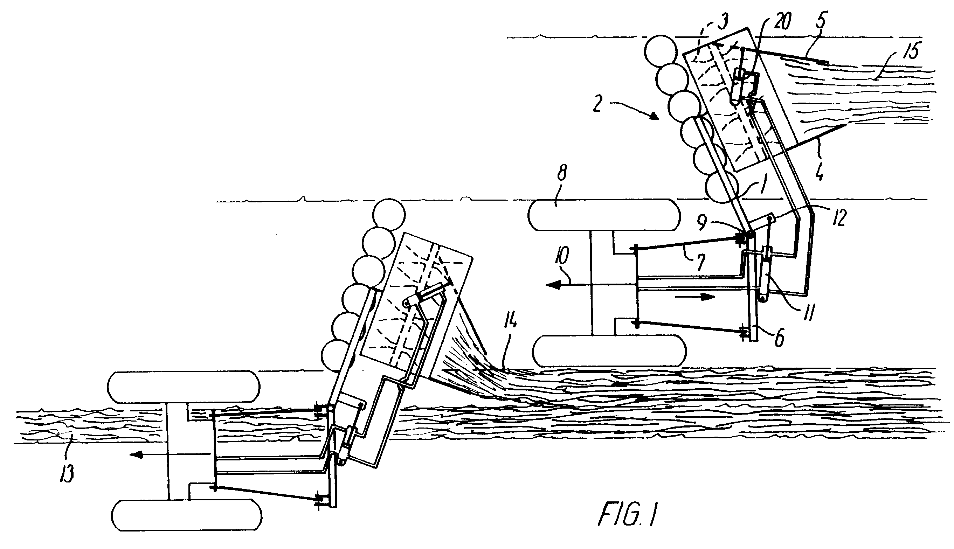

The mower shown in Fig 1 comprises a supporting structure 1, in which disc mowing gear 2 are suspended and to which a conditioning unit with a crimper rotor 3 shown in dotted line is connected. At the swath ejection opening the swath width is limited by means of sideways limiting plates 4 and 5, of which one 4 is stationary, whilst the other is pivotal on a vertical axis.

The supporting structure 1 is pivotally connected with a frame structure 6, mounted on the carrying arms 7 of a tractor, of which only the rear bull wheels 8 are shown. The pivotal connection serves to enable the mower to pivot on the vertical pivot axis 9 so as to move between a not-shown transport position in which it is substantially parallel with the driving direction 10 of the tractor and a working position. The pivotal movement is performed by a double acting hydraulic cylinder 11 arranged between the frame structure 6 and a member 12 connected with the supporting structure 1 of the mower.

The hydraulic cylinder according to the invention is designed with such a stroke that the working position can be varied on both sides of a position which is substantially at right angles to the driving direction between oblique positions in which the side of the mower remotest from the tractor is in front of and to the rear, respectively, of the pivot axis 9 seen in the driving direction. The angle variation range may be approx.30° on each side of the position at right angles to the driving direction.

After having driven through the field in one of the two oblique positions for windrowing, the mower assumes the other oblique position during the subsequent drive, the limiting plate 5 at the same time being adjusted so as to lay the swath 14 in close abutment on the swath 13. The limiting plate 5 is made to pivot by means of a double acting hydraulic cylinder 20, which is in operative connection with the hydraulic cylinder 11, so that the limiting plate 5 is turned from one to the other of two fixed oblique positions at pivoting of the mower. Adjustment of the swath limiting plate can thus be done from the tractor driver's cab by operating a single actuator.

As a result of the operative connection between the two working cylinders 11 and 12 the two oblique positions of the mower are determined in this embodiment by not-shown fixed stops for the pivotal movement.

During the subsequent run, the tractor drives along a track corresponding to the harvested working width of the mower during the preceding run og the adjustment of the limiting plate 5 is changed so that swath 15 is laid so that during the next run - as swath 13 - it lies immediately at the inner side of the bull wheel 8 of the tractor which is closest to the mower.

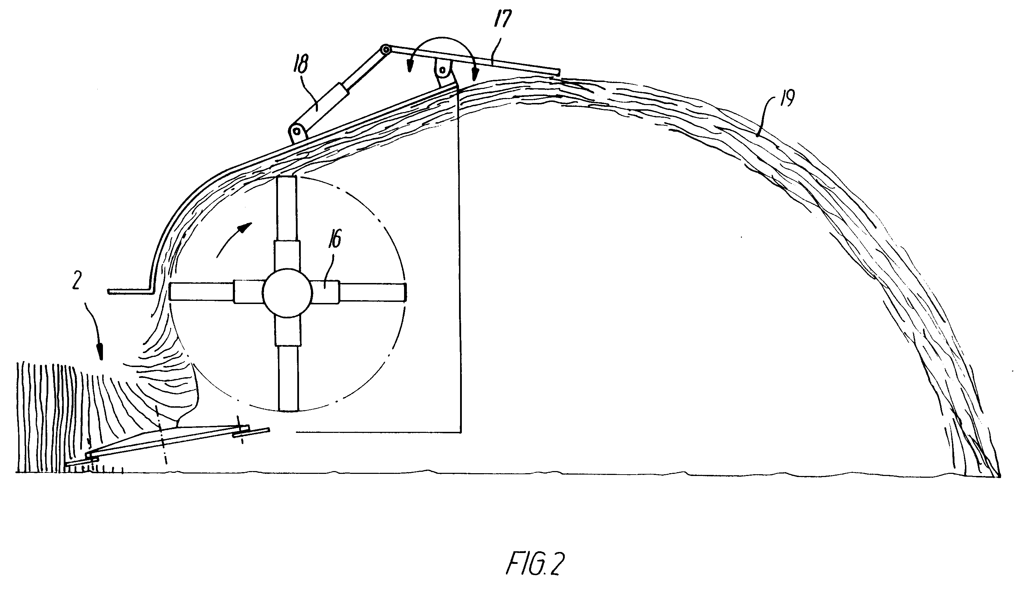

In the side view of Fig 2 is shown an alternative embodiment of the windrowing means, whereby the sideways limiting plates, which project relatively far to the rear and which due to their weight can be an impediment in a lift-suspended mower, can be dispensed with. The windrows are instead adjusted by adjustment of the throwing range for the swath ejected from the crimper rotor 16. In the Figure this adjustment is made by arrangement behind the crimper rotor 16 of a control plate 17, pivotal on a horizontal axis and adjusted by means of a hydraulic cylinder 18 for limiting the throwing range from the top. In this embodiment it is not necessary to have fixed stops for determining the two oblique positions of the mower.

As another possibility, the throwing range can be adjusted by an adjustment, possibly infinitely variable, of the rate of rotation of the crimper rotor, which may be made hydraulically or by a variator drive of the rotor.

## Claims

1. A mower of the type which on one side is pivotally connected with a frame structure (6) for direct mounting on the rear carrying arms (7) of a tractor, so that by means of said pivotal connection (9) it can be turned from a transport position, in which it is substantially parallel to the driving direction (10) of the tractor to a working position outside the track of the tractor, in which it is substantially transverse to the driving direction (10), whereas an activating member (11) for mechanical performance of the pivotal movement is arranged between said frame structure (6) and an element (12) connected to the supporting structure of the mower, **characterized** in that said activating member is designed so as to be capable of varying the working position of the mower on both sides of a position at right angles to the driving direction (10) of the tractor between oblique positions, in which the side of the mower remotest from the frame structure (6) is forward of and to the rear of the frame structure (6) seen in the driving direction (10) respectively, whereas the mower is provided with means (5, 17) for adjustment of the position of the windrows of ejected swath on the ground.

2. A mower as claimed in claim 1, **characterized** in that the angle variation range for said oblique positions of the mower is approx. +/- 30° as compared to said position at right angles to the driving direction (10).

3. A mower as claimed in claim 1 or 2, **characterized** in that said adjustment means for the ejected swath (13, 14, 15) comprises sideways limiting plates (4, 5) at the crop ejection opening of the mower, of which one (5) is pivotal on a vertical axis for adjustment of the windrowing width.

4. A mower as claimed in claim 3, **characterized** in that said activating member comprises a first hydraulic cylinder (11) arranged between the frame structure (6) and the supporting structure (1) of the mower and that the pivotal movement of said one sideways limiting plate (5) is brought about by means of a second, double-acting hydraulic cylinder mounted on the supporting structure (1) of the mower, in operative connection with the first hydraulic cylinder (11) for turning the side plate (5) between two positions corresponding to each of said oblique positions of the mower.

5. Mower as claimed in claim 1 or 2 with crop conditioning cylinder, **characterized** in that said adjustment means (17) is designed for adjusting the throwing range for the swath ejected from the mower.

6. A mower as claimed in claim 5, **characterized** in that said adjustment means comprises means for adjusting the speed of rotation of the conditioning cylinder (16).

7. A mower as claimed in claim 5, **characterized** in that said adjustment means comprises a control plate (17) arranged behind the conditioning cylinder (16) and pivotal on a horizontal axis for limiting the swath ejection (19) from above.

## Patentansprüche

1. Mähmaschine von der Art, die an der einen Seite für direkte Montierung auf den hintersten Tragbalken (7) eines Traktors mit einer Rahmenkonstruktion (6) drehbar verbunden ist, sodaß sie mittels erwähnter Drehverbindung (9) von einer Transportstellung, worin sie zur Fahrtrichtung (10) des Traktors im wesentlichen parallel ist, in eine Arbeitsstellung außerhalb der Spurweite des Traktors, worin sie zur Fahrtrichtung (10) im wesentlichen quer liegt, geschwenkt werden kann, während ein Betätigungsorgan zum mechanischen Durchführen der Drehbewegung zwischen erwähnter Rahmenkonstruktion (6) und einem mit der Tragkonstruktion der Mähmaschine verbundenen Element (12) angeordnet ist, dadurch gekennzeichnet, daß erwähntes Betätigungsorgan derart ausgestaltet ist, daß es imstande ist, die Arbeitsstellung der Mähmaschine auf beiden Seiten einer rechtwinkelig zur Fahrtrichtung (10) des Traktors gelegenen Stellung zwischen schrägen Stellungen zu variieren, in welchen Stellungen die von der Rahmenkonstruktion (6) entfernteste Seite der Mähmaschine, in der Fahrtrichtung (10) gesehen, im Verhältnis zur Rahmenkonstruktion (6) vorne bzw. hinten liegt, während die Mähmaschine mit Mitteln (5, 17) zur Regelung der Plazierung der Reihen von ausgeworfener Schwade auf der Erde vorgesehen ist.

2. Mähmaschine nach Anspruch 1, dadurch gekennzeichnet, daß der Winkelvariationsbereich für erwähnte schräge Stellungen der Mähmaschine etwa +/- 30° im Verhältnis zu erwähnter in der Fahrtrichtung (10) rechtwinkeliger Stellung ist.

3. Mähmaschine nach Anspruch 1 oder 2, dadurch gekennzeichnet, daß erwähntes Regelungsmittel für die ausgeworfene Schwade (13, 14, 15) bei der Ernteauswurfsöffnung der Mähmaschine seitliche Begrenzungsplatten (4, 5) umfaßt, von welchen die eine für Regelung der Schwadenbreite um eine senkrechte Achse schwenkbar ist.

4. Mähmaschine nach Anspruch 3, dadurch gekennzeichet, daß erwähntes Betätigungsorgan einen zwischen der Rahmenkonstruktion (6) und der Tragkonstruktion (1) der Mähmaschine angeordneten ersten Hydraulikzylinder (11) umfaßt, und daß die Drehbewegung erwähnter einer Platte zur seitlichen Begrenzung (5) mittels eines doppeltwirkenden, auf der Tragkonstruktion (1) der Mähmaschine montierten zweiten Hydraulikzylinders entsteht, der in operativer Verbindung mit dem ersten Hydraulikzylinder (11) für Schwenkung der Seitplatte (5) zwischen zwei erwähnter schrägen Stellungen der Mähmaschine entsprechenden Stellungen ist.

5. Mähmaschine nach Anspruch 1 oder 2, mit Erntekonditionierungszylinder, dadurch gekennzeichnet, daß erwähnte Regelungsmittel (17) zur Einstellung der Wurflänge für die von der Mähmaschine ausgeworfene Schwade ausgestaltet ist.

6. Mähmaschine nach Anspruch 5, dadurch gekennzeichnet, daß erwähntes Regelungsmittel Mittel zur Einstellung der Drehgeschwindigkeit des Konditionierungszylinders (16) umfaßt.

7. Mähmaschine nach Anspruch 5, dadurch gekennzeichnet, daß erwähntes Regelungsmittel ein hinter dem Konditionierungszylinder (16) und um eine waagerechte Achse drehbar angeordnetes Leitblech (17) zur Begrenzung des Schwadenauswurfes (19) von oben umfaßt.

## Revendications

1. Faucheuse du type qui sur un coté est relié à pivotement avec une structure de cadre (6) pour montage direct sur les bras porteurs (7) à l'arrière d'un tracteur si bien que par cette liaison à pivotement, elle peut être pivotée depuis une position de transport dans laquelle elle est essentiellement parallèle à la direction (10) dans laquelle le tracteur est conduit, jusqu'à une position de travail hors de la voie du tracteur, et dans laquelle elle s'étend essentiellement transversalement à la direction de conduite (10), un organe d'actionnement (11) pour effectuer le mouvement de pivotement étant disposé entre ladite structure de cadre (6) et un élément (12) relié à la structure porteuse de la faucheuse, caractérisée en ce que ledit organe d'actionnement est conçu pour être capable de varier la position de travail de la faucheuse de part et d'autre d'une position à angle droit avec la direction de conduite (10) du tracteur, entre des positions obliques, dans lesquelles le coté de la faucheuse le plus éloigné de la structure de cadre (6) se trouve, respectivement, en avant et en arrière de la structure de cadre (6) condidérée dans le sens de conduite (10), la faucheuse comportant des moyens (5, 17) de réglage de la position des andains éjectés au sol.

2. Faucheuse selon la revendication 1, caractérisée en ce que la gamme de variation angulaire desdites positions obliques de la faucheuse est d'environ ± 30° par rapport à ladite position à angle droit sur la direction de conduite (10).

3. Faucheuse selon les revendications 1 ou 2, caractérisée en ce que lesdits moyens de réglage des andains éjectés (13, 14, 15) comprennent des plaques de limitation latérale (4, 5) près de l'ouverture d'éjection de récolte de la faucheuse, au moins une (5) de ces plaques étant pivotable autour d'un axe vertical pour réglage de la largeur d'andain.

4. Faucheuse selon la revendication 3, caractérisée en ce que ledit organe d'actionnement comprend un premier vérin hydraulique (11) disposé entre la structure de cadre (6) et la structure porteuse (1) de la faucheuse et en ce que le mouvement de pivotement de ladite une plaque de limitation latérale (5) est est réalisé à l'aide d'un second vérin hydraulique à double action, monté sur la structure porteuse (1) de la faucheuse, en liaison fonctionnelle avec le premier vérin hydraulique (11), pour faire tourner la plaque laérale (5) entre deux positions correspondant à chacune desdites positions obliques de la faucheuse.

5. Faucheuse selon les revendications 1 ou 2, avec cylindre de conditionnement de récolte, caractérisée en ce que ledit moyen de réglage (17) est conçu pour ajuster l'étendue d'éjection de l'andain éjecté de la faucheuse.

6. Faucheuse selon la revendication 5, caractérisée en ce que ledit moyen de réglage comprend des moyens de réglage de la vitesse de rotation du cylindre de conditionnement (16).

7. Faucheuse selon la revendication 5, caractérisée en ce que ledit moyen de réglage comprend une plaque de commande (17) disposée derrière le cylindre de conditionnement (16) et pivotable autour d'un axe horizontal, pour limiter l'éjection d'andain (19) vers le haut.
